# EUROPÄISCHE PATENTANMELDUNG

(11) **EP 1 914 442 A2**
(43) Veröffentlichungstag der Anmeldung: **23.04.2008**
(21) Anmeldenummer: 07019446.9
(22) Anmeldetag: 04.10.2007
(51) Int. Cl.: F16F 9/46

(54) **Schwingungsdämpfer mit verstellbarer Dämpfkraft**

(30) Priorität: 17.10.2006 DE 102006048913
(71) Anmelder: ZF FRIEDRICHSHAFEN AG, 88038 Friedrichshafen (DE)
(72) Erfinder: Heyn, Steffen, 97464 Niederwerrn (DE); Manger, Thomas, 97535 Wasserlosen/Kasten (DE); Sieber, Andreas, 97422 Schweinfurt (DE); Zeißner, Bernd, 97332 Gaibach (DE)

(57) **Zusammenfassung**

Schwingungsdämpfer mit verstellbarer Dämpfkraft, umfassend einen Ventilkörper, der mittels eines Aktuators zu einer Ventilsitzfläche gegen eine Federkraft eine Betriebsbewegung ausführt, wobei eine die Funktion Ventildurchlassquerschnitt-Energiezufuhr des Aktuators beschreibende Kennlinie zumindest zwei Bereiche unterschiedlicher Steigung aufweist und der Ventilkörper von dem Aktuator gegen eine nichtlineare Federkraft verstellt wird.

## Beschreibung

Die Erfindung betrifft einen Schwingungsdämpfer mit verstellbarer Dämpfkraft gemäß dem Oberbegriff von Patentanspruch 1.

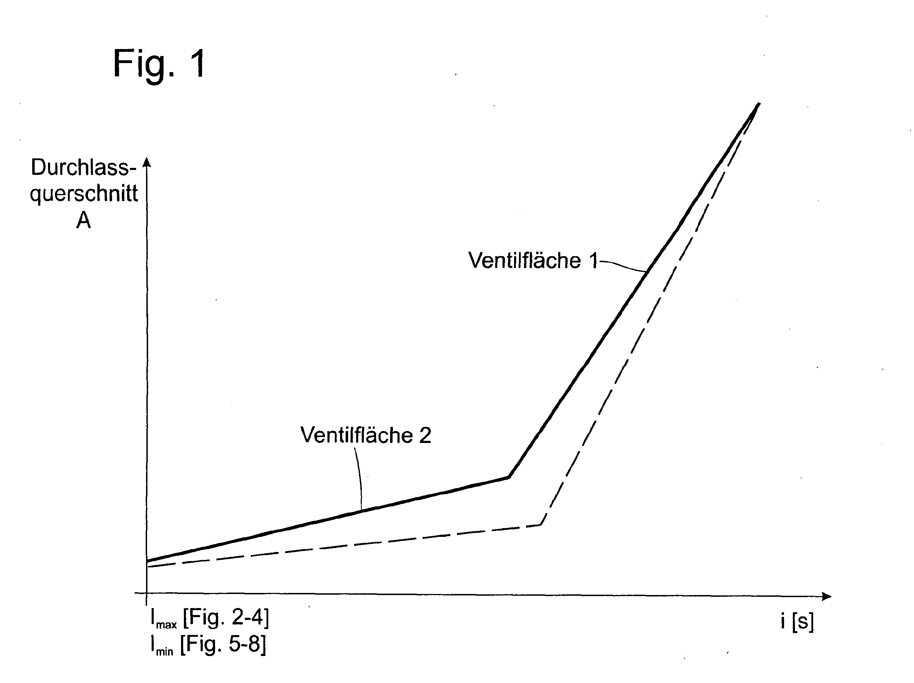

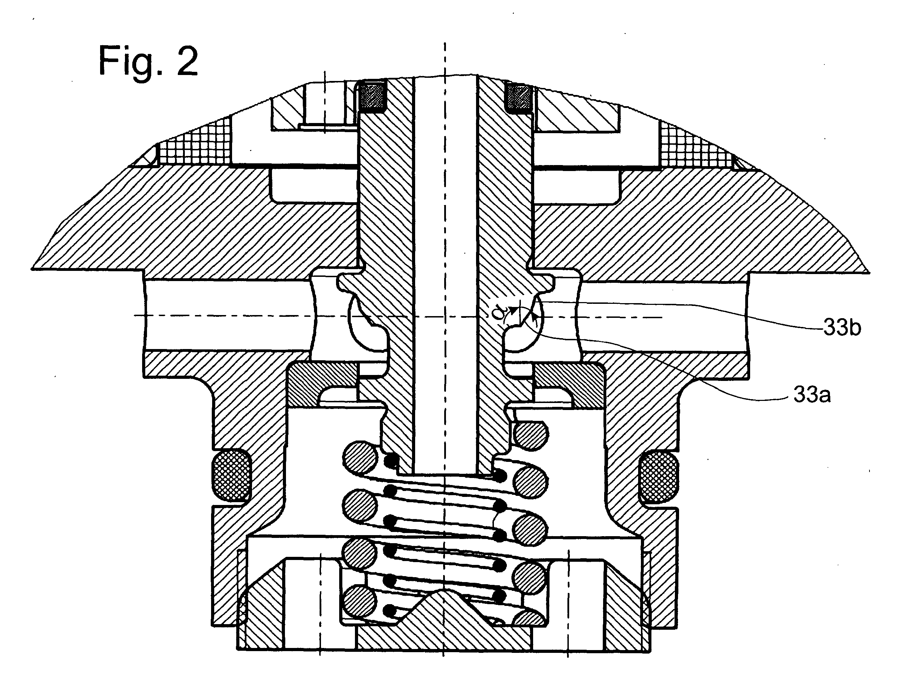

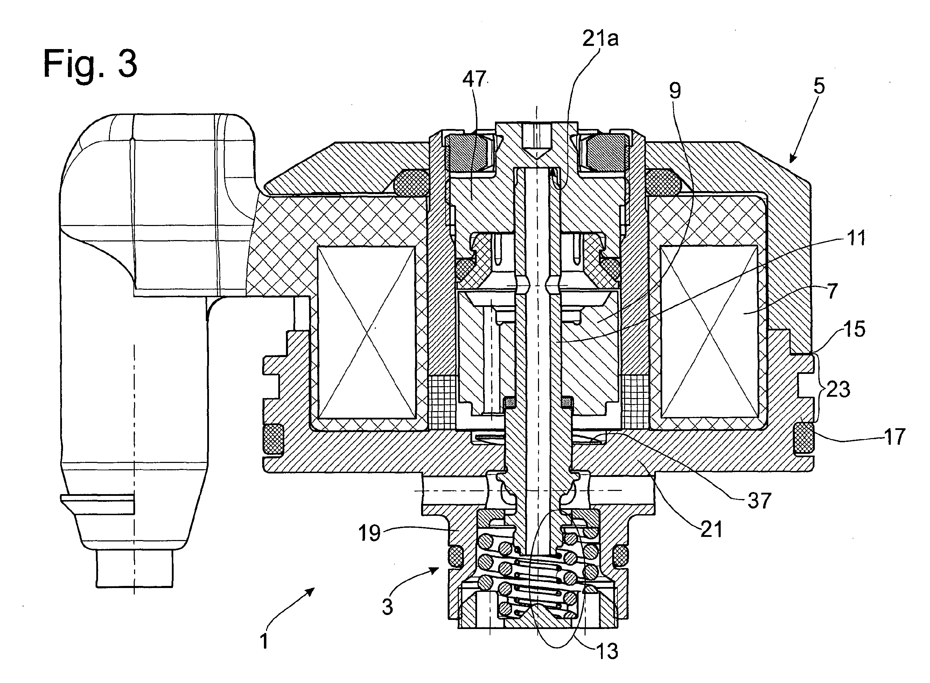

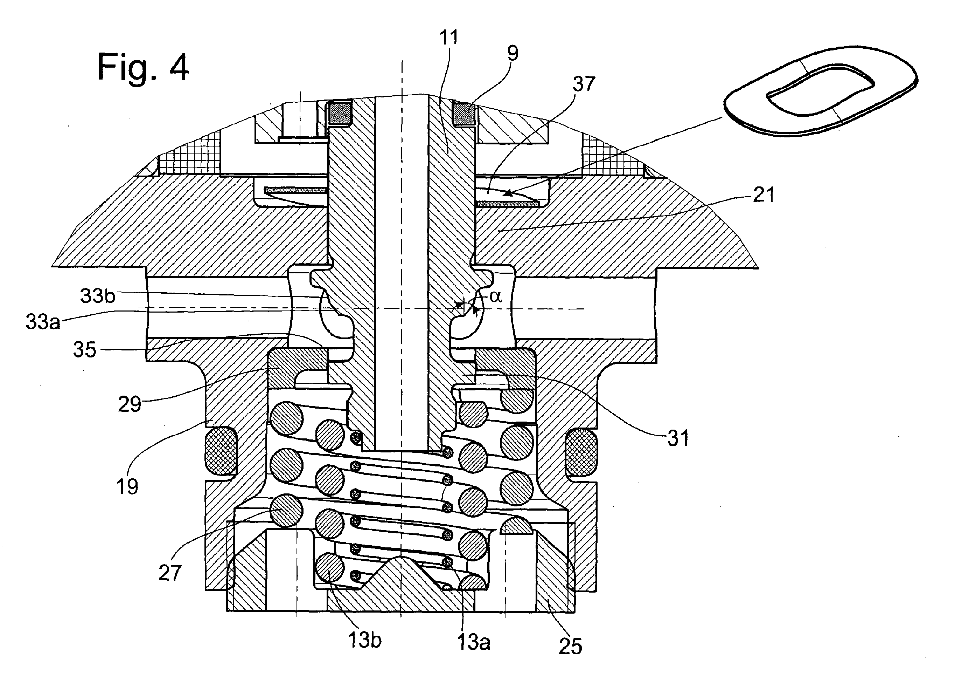

Aus der DE 196 24 897 A1 ist ein Dämpfventil mit verstellbarer Dämpfkraft bekannt. Das Dämpfventil umfasst ein Hauptstufenventil und ein Vorstufenventil, das in den Fig. 3 und 4 vergrößert dargestellt ist. Für eine geknickte Strom-VentilquerschnittsKennlinie gemäß der Fig. 1 der Figurenbeschreibung zu dieser Erfindung ist es bereits bekannt, dass der Ventilkörper 73 eine doppelt konische Ventilfläche aufweist, wie die Fig. 2 vergrößert zeigt. In Abhängigkeit der Winkel der Ventilflächen 1 und 2 zur Längsachse wird die Strom-Ventilquerschnittskennlinie bestimmt. Wenn der von der Ventilfläche 2 bestimmte Kennlinienabschnitt noch flacher verlaufen soll, wie gestrichelt dargestellt ist, dann muss der Winkel der Ventilfläche 2 noch kleiner sein. Dieser Ventilauslegung sind jedoch Grenzen gesetzt. Zum einen wirken sich die Toleranzabweichungen des Durchmessers der Ventilfläche 2 und des Durchmesser der Ventilsitzfläche aus. Schon geringste Abweichungen verfälschen die gewünschte Dämpfkraftkennlinie bzw. die Strom-Ventilquerschnittsfläche. Andererseits tritt das Problem auf, dass der Ventilkörper z. B nach einer maximalen Schließstellung von der Ventilfeder aufgrund der Selbstklemmung zwischen der Ventilfläche 2 und der Ventilsitzfläche nicht mehr in eine Durchlassstellung zurück bewegt werden kann.

Aufgabe der vorliegenden Erfindung ist es, das aus dem Stand der Technik bekannte Problem bzgl. der Strom-Ventilquerschnittskennlinie zu lösen.

Erfindungsgemäß wird die Aufgabe dadurch gelöst, dass der Ventilkörper von dem Aktuator gegen eine nichtlineare Federkraft verstellt wird.

Der große Vorteil der Erfindung besteht darin, dass die Form des Ventilsitzes für die Funktion "Ventildurchlassquerschnitt-Energiezufuhr" nicht zwingend maßgeblich ist, so dass die Gestaltungsfreiheit für den Ventilkörper deutlich erweitert ist. Man kann eine fertigungsfreundliche und toleranzunempfindliche Form des Ventilkörpers wählen.

Dabei wird die nicht lineare Federkraft von mindestens zwei Ventilfedern bestimmt. Je nach geforderter Kennlinie kann man auch weitere Ventilfedern verwenden.

Die Kraft des Aktuators wirkt gegen die resultierende Kraft der Ventilfedern. Daraus ergibt sich die Möglichkeit, dass die mindestens eine der mindestens zwei Ventilfedern nach einem definierten Verstellweg des Ventilkörpers wirksam ist und ein nicht linearer Kennlinienverlauf erreicht wird.

Bei einer ersten Variante wird die nicht lineare Federkraft von mindestens zwei parallel geschalteten Ventilfedern bestimmt.

Des Weiteren ist vorgesehen, dass in einem ersten Gehäuseteilabschnitts des verstellbaren Dämpfventils eine erste Ventilfeder angeordnet ist, die auf den Ventilkörper wirkt, wobei sich diese Feder an einem Abstützelement axial abstützt, das am ersten Gehäuseteilabschnitt fixiert ist, wobei diese Feder den Ventilkörper axial gegen eine Anschlagfläche des Gehäuseteilabschnitts vorspannt und die zweite Ventilfeder in einem zweiten Gehäuseabschnitt angeordnet ist. Der Vorteil besteht darin, dass der Ventilkörper zusammen mit der ersten Ventilfeder und dem Abstützelement eine vormontierbare Baueinheit bilden.

Die zweite Feder soll nur auf einem relativ kleinen Hubweg des Ventilkörpers wirken, so dass eine Ventilfeder vorteilhafterweise als eine Scheibenfeder ausgeführt ist.

Bei einer Alternativvariante wird der Ventilkörper wechselseitig von mindestens einer Feder beaufschlagt, wobei die Federkraft für mindestens eine Beaufschlagungsrichtung eine nicht lineare Kennlinie aufweist.

Um das gewünschte Kennlinienverhalten mit möglichst einfachen Mitteln zu erreichen, hebt die mindestens eine Feder während des Ventilhubs von dem Ventilkörper ab.

Des Weiteren besteht die Möglichkeit, dass mindestens zwei in Reihe geschaltete Federn verwendet werden, wobei ein Schaltelement den Einsatzpunkt einer der Federn steuert.

Um eine strikte Trennung der Federkräfte der Ventilfedern zu erreichen, wird das Schaltelement von einer der Federn gegen einen Anschlag vorgespannt und hebt im Verlauf einer Öffnungsbewegung des Ventilkörpers von dem Anschlag ab.

Anhand der folgenden Figurenbeschreibung soll die Erfindung näher erläutert werden:

Es zeigt:
- Fig. 1: Kennlinie Strom-Ventilquerdurchlassquerschnitt
- Fig. 2: Aus dem Stand der Technik bekannter Ventilkörper des verstellbaren Dämpfventils
- Fig. 3 - 4: Ausführungsform mit zusätzlicher parallel wirksamer Ventilfeder
- Fig. 5-6: Ausführungsform mit zusätzlicher in Reihe geschalteter Ventilfeder

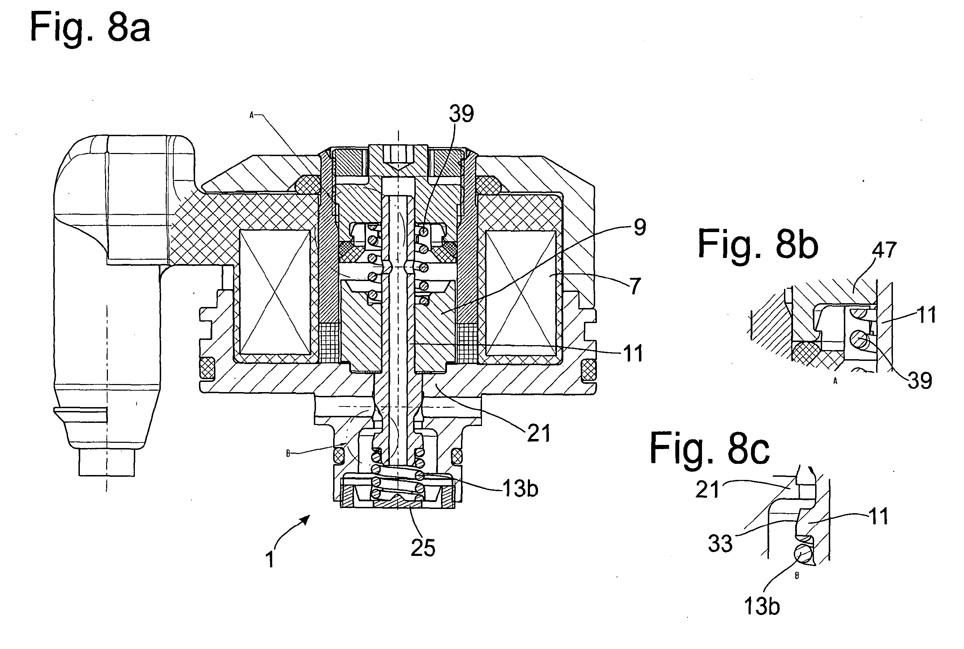

- Fig. 7-8: Ausführungsform mit zusätzlich parallel wirksamer Ventilfeder

Die Fig. 3 zeigt von einem Dämpfventil 1 mit verstellbarer Dämpfkraft ein Vorstufenventil 3 mit einem Aktuator 5. Ein kombinierbares Hauptstufenventil für diese Vorstufenventil 3 ist bereits aus der genannten DE 196 24 897, Fig. 2, bekannt und stellt einen Teil dieser Figurenbeschreibung dar.

Der Aktuator 5 umfasst einen Spulenkörper 7, der auf einen Anker 9 an einem rohrförmigen Ventilkörper 11 eine Stellkraft gegen die Kraft einer Ventilfederanordnung 13 ausüben kann. Ein Dämpfventilgehäuse 15 verfügt über einen topfartigen Grundkörper 17. In einem rohrförmigen Teilabschnitt 19 befindet sich die Ventilfederanordnung 13. Getrennt durch einen Boden 21 befindet sich in einem zweiten Gehäuseabschnitt 23 der Spulenkörper 7. Im unbelasteten Zustand des Aktuators spannt die Feder 13 den Ventilkörper 11 gegen eine Anschlagfläche 21 a Dämpfventilgehäuses 15 bzw. einer Einstellschraube 47. Bei einer Bestromung des Spulenkörpers 7 verringert sich der Abstand zwischen dem ringförmigen Anker 9 und der Oberseite des Bodens 21.

In der Fig. 4 ist der erste Gehäuseabschnitt 19 mit den Ventilfedern 13a; 13b der Ventilfederanordnung 13 vergrößert dargestellt. Der rohrförmige Teilabschnitt verfügt an seinem dem Boden 21 gegenüberliegenden Ende über eine Einschraubscheibe 25, das als Abstützelement für zwei Ventilfedern 13a; 13b dient. Eine dritte äußere Feder 27 dient dazu, eine Ventilsitzscheibe 29 axial zum rohrförmigen Teilabschnitt auch gegen die Stellkraft des Aktuators 7; 9; 11 sowie die Einschraubscheibe 25 im Gewinde zu fixieren.

Eine innere Ventilfeder 13a mit einer kleinen Vorspannung wirkt über den maximalen Hub des Ventilkörpers 11 und bewegt den Ventilkörper 11 bei Stromausfall in die dargestellte Ventilposition, bei der das Dämpfventil einer gewünschten Notbetriebskennlinie folgt. Die für den Normalbetrieb vorgesehene äußere Ventilfeder 13b hat in der Notbetriebsstellung keinen Kontakt zu einem ersten Kraftübertragungsflansch 31.

Die für den Normalbetrieb des Vorstufenventils 3 relevante Sitzfläche verläuft unter zwei Stufenwinkeln zur Längsachse des Ventilkörpers, so dass eine erste und eine zweite Ventilfläche 33a; 33b vorliegen. Generell ist die Erfindung auch bei einer stufenlosen Ventilfläche sinnvoll anwendbar.

Bei einer geringen Bestromung des Aktuators nähert sich die erste Ventilfläche 33a gegen die Kraft der äußeren Ventilfeder 13b der Oberseite der Ventilsitzscheibe 29 mit ihrer Ventilsitzfläche 35. Der Abstand der Ventilfläche 33a; 33b und der Ventilsitzfläche 35 bestimmen den Durchflussquerschnitt A gemäß dem Kennlinienteil mit der größeren Steigung (s. Fig. 2). Je größer der Winkel α zwischen der Längsachse und der Ventilfläche 33a; 33b, umso steiler verläuft der Kennlinienteil.

Nach einem definierten Verstellweg, der mit einer größeren Bestromung des Aktuators 7; 9; 11 verbunden ist, wird eine zweite Ventilfeder 37 wirksam, so dass bezogen auf den gesamten bestromten Verstellweg gegen die Kraft des Aktuators eine nichtlineare Federkraft auf den Ventilkörper einwirkt. In diesem Ausführungsbeispiel sind die beiden Ventilfedern 13b; 37 parallel geschaltet. Die zweite Ventilfeder 37, die als eine Scheibenfeder ausgeführt ist, liegt auf dem Boden 21 des topfförmigen Dämpfventilgehäuses 17 und wirkt auf einen Kraftübertragungsflansch, der von dem ringförmigen Anker 9 gebildet wird. Ab dem Einsatzpunkt der zweiten Ventilfeder 37 addieren sich die Federraten bzw. Federkräfte der beiden Ventilfedern 13b; 37, so dass bei einer weiteren linearen Bestromung zwar eine größere Stellkraft vorliegt, die jedoch gegen eine sprunghaft angestiegene Summenfederrate der beiden Ventilfedern 13b; 37 wirkt. Das Verhältnis von Bestromung/Ventilfederkraft hat sich verkleinert, so dass eine flachere Kennlinie Bestromung-Durchflussquerschnitt A erreicht werden kann. Die Verwendung einer nichtlinearen Federkraft für den Normalbetrieb des Aktuators entkoppelt den Konturenverlauf der Ventilflächen 33a; 33b von der Kennlinie Bestromung-Durchflussquerschnitt A. Es kann durchaus sinnvoll sein eine gestufte Ventilflächenkontur zu verwenden, aber der zwanghafte Zusammenhang zur Kennlinie Bestromung-Durchflussquerschnitt A ist aufgehoben, so dass man freier ist in der Gestaltung des Konturenverlaufs der Ventilfläche am Ventilkörper.

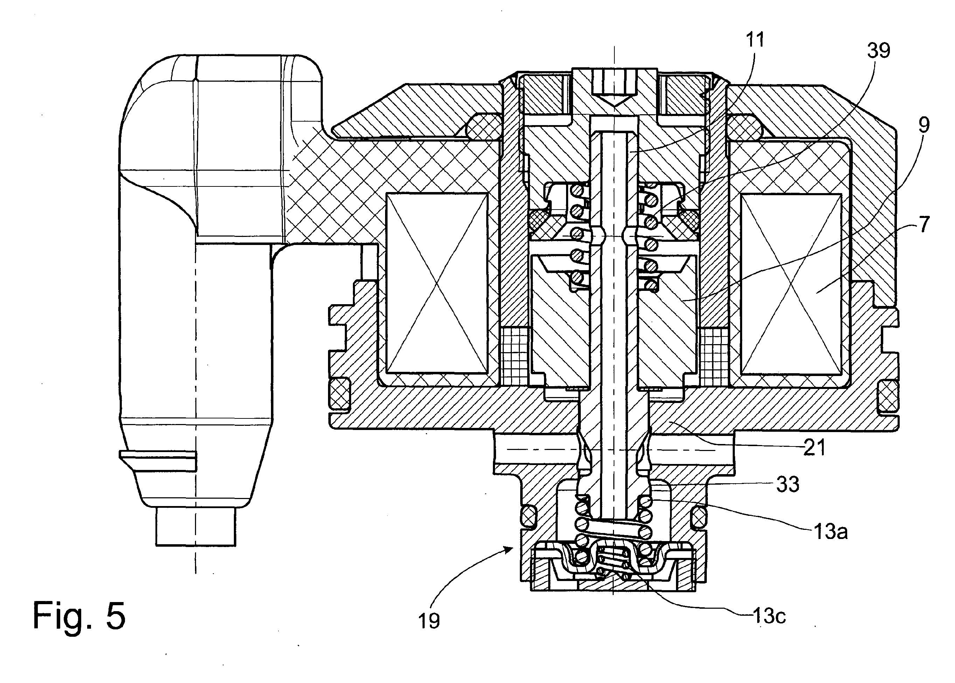

Die Fig. 5 zeigt einen Aktuator 7; 9; 11, der in seinen Grundzügen der Ausführung nach Fig. 3 entspricht. Abweichend ist der Ventilkörper 11 zusammen mit dem Anker 9 axial schwimmend zwischen einer Ventilfeder 39 im Bereich des Ankers und zwei Ventilfedern 13a; 13c im rohrförmigen Teilabschnitt 14 des Gehäuses verspannt. Ein weiterer Unterschied zur Ausführung nach Fig. 3 besteht darin, dass die Ventilsitzfläche 33 an einer Unterseite des Bodens 21 des Dämpfventilgehäuses ausgeführt ist.

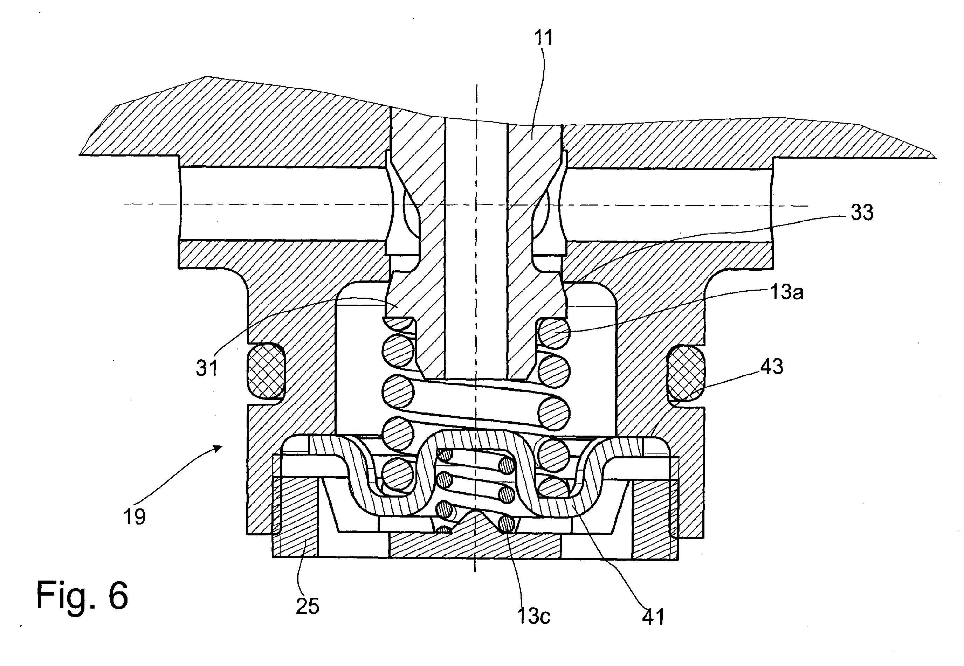

In der Fig. 6 ist der Teil des Ventilkörpers 11 mit der mindestens einen Ventilfläche 33 vergrößert darstellt. Auf der Einschraubscheibe 25, die auch auf eine andere Art an dem Gehäuse fixiert sein kann, stützt sich eine erste in Schließrichtung des Ventilkörpers wirksame Ventilfeder 13c ab und drückt ein Schaltelement 41 gegen einen Anschlag 43 im rohrförmigen Gehäuseabschnitt 19. Eine zweite in Schließrichtung wirkende Ventilfeder 13b ist unabhängig von der Hublage des Ventilkörpers stets zwischen der Oberseite des Schaltelements 41 und dem Kraftübertragungsflansch 31 am Ventilkörper 11 verspannt. Die Federrate der zweiten Ventilfeder 13b ist größer als die Federrate der ersten Ventilfeder 13c, jedoch ist die Vorspannkraft der ersten Ventilfeder 13c größer als die Vorspannkraft der zweiten Ventilfeder 13b. Die Fig. 6 zeigt das Merkmal, dass der Ventilkörper auch eine einzige Ventilfläche 33 aufweisen kann.

Bei einer Bestromung wirkt die resultierende Kraft aus ankerseitiger Feder 39 und Stellkraft des Aktuators 7; 9; 11 gegen die beiden Ventilfedern 13b; 13c. Da die Vorspannkraft der ersten Ventilfeder 13c größer ist als die Vorspannkraft der zweiten Ventilfeder 13b, verkürzt sich nur die zweite Ventilfeder 13b, wobei die Ventilfläche 33 von der Ventilsitzfläche des Bodens 21 abhebt. Das Schaltelement 41 verbleibt dabei in seiner Position am Anschlag 43. Bei weiterer Bestromung bis auf ein definiertes Niveau, dass dem Knickpunkt der Kennlinie Bestromung-Durchlassquerschnitt A entspricht, nimmt die Vorspannkraft der ankerseitigen Feder 39 linear ab und die zweite Ventilfeder 13c hat dieselbe Vorspannkraft erreicht wie die erste Vorspannfeder 13b. Bei weiterer Bestromung hebt das Schaltelement 41 von dem Anschlag 43 ab, so dass der Aktuator 7; 9 gegen die Reihenschaltung der beiden Ventilfedern 13b; 13c wirkt, so dass dann eine deutlich,kleinere Gesamtfederrate vorliegt. Setzt man eine lineare Stromsteigerung am Aktuator 7; 9 voraus, dann wird mit einem definierten Stromzuwachs im Vergleich zur Hublage des Ventilkörpers 11, bei der das Schaltelement 41 noch seine Anschlagposition einnahm, ein deutlich größerer Hubweg des Ventilkörpers 11 zurückgelegt, so dass insgesamt eine nicht lineare Federkennlinie der Ventilfedern vorliegt.

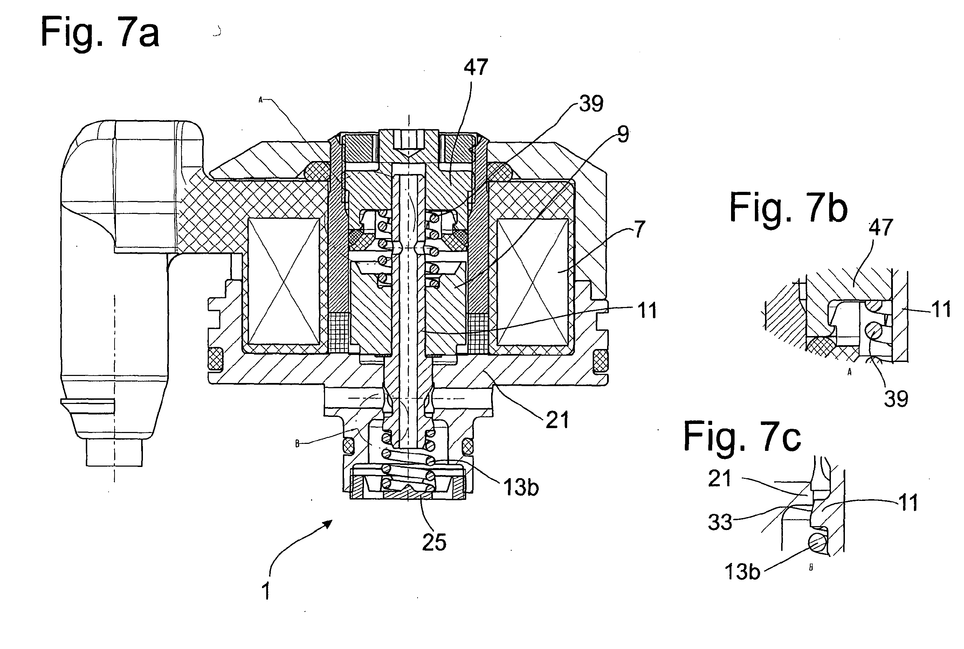

Die Figurengruppe 7a - 8c zeigt eine weitere Ausführungsform des verstellbaren Dämpfventils 1, die dem Funktionsprinzip der Figuren 5 und 6 ähnelt. Mit den Figuren 7a - 7c soll der stromlose Zustand des Aktuators 7; 9 verdeutlicht werden. Die ankerseitige Ventilfeder 39 und die Ventilfeder 13b, die zwischen der Einschraubscheibe 25 und dem Ventilkörper 11 angeordnet ist, verspannen den Ventilkörper 11, der dabei seine Schließposition oder eine nahezu vollständig geschlossene Hublage einnimmt, wie die Fig. 7c zeigt. Aus den Fig. 7a; 7b ist ersichtlich, dass die Endwindungen der ankerseitigen Ventilfeder 39 an der Einstellschraube 47 und dem Anker 7; 9 anliegen und damit unter Vorspannung steht.

Bei einer Bestromung des Aktuators 7; 9 wirken die resultierenden Kräfte der ankerseitigen Ventilfeder 39 und die Stellkraft des Aktuators gegen die ventilkörperseitige Ventilfeder 13b, wobei sich der Ventilkörper 11 gegen die Kraft der ventilkörperseitigen Ventilfeder 13b verschiebt. Ab einem bestimmten Bestromungsniveau ist die ankerseitige Ventilfeder 39 vollständig entspannt, d. h. der Abstand zwischen der Oberseite des Ankers und der Innenseite des Einstellschraube 47 ist größer als die entspannte Länge der ankerseitigen Ventilfeder 39. Diese Hublage bestimmt den Knickpunkt der Kennlinie Bestromung-Durchflussquerschnitt A, da bei weiterer Bestromung des Aktuators 5; 7; 9 nur diese Magnetkraft gegen die Vorspannkraft der ventilkörperseitigen Ventilfeder 13b wirkt.

## Patentansprüche

1. Schwingungsdämpfer mit verstellbarer Dämpfkraft, umfassend einen Ventilkörper, der mittels eines Aktuators zu einer Ventilsitzfläche gegen eine Federkraft eine Betriebsbewegung ausführt, wobei eine die Funktion Ventildurchlassquerschnitt-Energiezufuhr des Aktuators beschreibende Kennlinie zumindest zwei Bereiche unterschiedlicher Steigung aufweist,
**dadurch gekennzeichnet,**
**dass** der Ventilkörper (11) von dem Aktuator (7; 9) gegen eine nichtlineare Federkraft verstellt wird.

2. Schwingungsdämpfer nach Anspruch 1,
**dadurch gekennzeichnet,**
**dass** die nicht lineare Federkraft von mindestens zwei Ventilfedern (13b; 13c; 39) bestimmt wird.

3. Schwingungsdämpfer nach Anspruch,
**dadurch gekennzeichnet,**
**dass** die' mindestens eine der mindestens zwei Ventilfedern (13b) nach einem definierten Verstellweg des Ventilkörpers (11) wirksam ist.

4. Schwingungsdämpfer nach Anspruch 2,
**dadurch gekennzeichnet,**
**dass** die nicht lineare Federkraft von mindestens zwei parallel geschalteten Ventilfedern (1 3b; 37; 39) bestimmt wird.

5. Schwingungsdämpfer nach Anspruch 4,
**dadurch gekennzeichnet,**
**dass** in einem ersten Gehäuseteilabschnitts (19) des verstellbaren Dämpfventils (1) eine erste Ventilfeder (13a) angeordnet ist, die auf den Ventilkörper (11) wirkt, wobei sich diese Feder (13a) an einem Abstützelement (25) axial abstützt, das am ersten Gehäuseteilabschnitt (19) fixiert ist, wobei diese Feder (13a) den Ventilkörper (11) axial gegen eine Anschlagfläche des Gehäuseteilabschnitts (19) vorspannt und die zweite Ventilfeder (37) in einem zweiten Gehäuseabschnitt (23) angeordnet ist.

6. Schwingungsdämpfer nach Anspruch 2,
**dadurch gekennzeichnet,**
**dass** die zweite Feder (37) als eine Scheibenfeder ausgeführt ist.

7. Schwingungsdämpfer nach Anspruch 1,
**dadurch gekennzeichnet,**
**dass** der Ventilkörper (11) wechselseitig von mindestens einer Feder (39; 13b; 13c) beaufschlagt wird, wobei die Federkraft für mindestens eine Beaufschlagungsrichtung eine nicht lineare Kennlinie aufweist.

8. Schwingungsdämpfer nach Anspruch 7,
**dadurch gekennzeichnet,**
**dass** die mindestens eine Feder (13b; 39) während des Ventilhubs von dem Ventilkörper (11) abhebt.

9. Schwingungsdämpfer nach Anspruch 7,
**dadurch gekennzeichnet,**
**dass** mindestens zwei in Reihe geschaltete Federn (13b; 13c) verwendet werden, wobei ein Schaltelement (41) den Einsatzpunkt einer der Federn (13b; 13c) steuert.

10. Schwingungsdämpfer nach Anspruch 9,
**dadurch gekennzeichnet,**
**dass** das Schaltelement (41) von einer der Federn (13c) gegen einen Anschlag (43) vorgespannt wird und im Verlauf einer Öffnungsbewegung des Ventilkörpers (11) von dem Anschlag (43) abhebt.
